# FASCICULE DE BREVET EUROPEEN

(11) **EP 2 796 039 B1**
(45) Date de publication et mention de la délivrance du brevet: **17.04.2019**
(21) Numéro de dépôt: 14165602.5
(22) Date de dépôt: 23.04.2014
(51) Int. Cl.: A01M 29/34, A01G 13/10, A01M 1/10

(54) **Dispositif de piégeage à collier articulé**
Insektenfalle mit Gelenkschaft
Trapping device having an articulated collar

(30) Priorité: 24.04.2013 FR 1353725
(43) Date de publication de la demande: 29.10.2014
(73) Titulaire: Crea, 74130 Bonneville (FR)
(72) Inventeur: Bodo, Lionel, 74130 Ayze (FR)
(74) Mandataire: Cabinet Poncet

(56) Documents cités:
- DE-C1- 3 728 731
- FR-A1- 2 827 120
- FR-A1- 2 946 834
- US-A- 2 261 454
- US-A- 2 999 479

## Description

La présente invention concerne un dispositif de piégeage d'animaux nuisibles se développant sur les arbres ou attaquant les arbres, tels que les chenilles et plus particulièrement les chenilles processionnaires du pin.

Pour lutter contre de tels animaux nuisibles lors de leur montée sur les arbres ou lors de leur descente des arbres, on connaît des pièges comportant un collier conformé pour entourer le tronc d'un arbre, ledit collier comprenant un trottoir sensiblement annulaire s'étendant sensiblement dans un premier plan destiné à être orienté horizontalement.

Un dispositif de piégeage de ce type est par exemple décrit dans le document FR 2 903 856 A1. Pour assurer le montage du collier sur le tronc en s'adaptant à la circonférence de l'arbre, le trottoir sensiblement annulaire à paroi périphérique latérale est constitué par deux éléments identiques emboîtables de forme semi-circulaire. Pour s'adapter aux différents diamètres de tronc d'arbre, on prévoit des cales d'ajustement de forme également semi-circulaire. Enfin, pour s'opposer de façon plus complète à un passage des animaux nuisibles dans un interstice laissé entre le collier et le tronc de l'arbre, on a recours à un cordon de joint souple au mastic en général.

L'adaptation du collier de ce dispositif de piégeage aux différents diamètres de troncs nécessite un nombre important de pièces rapportées, ce qui nuit à la bonne tenue et à la bonne efficacité dans le temps du dispositif de piégeage, et ce qui rend difficile l'installation du dispositif de piégeage.

De plus, la forme semi-circulaire des éléments identiques emboîtables et des cales d'ajustement ne correspond souvent pas à la forme réelle de la périphérie des troncs des arbres, qui n'est jamais rigoureusement circulaire.

Enfin, le rayon des éléments identiques emboîtables semi-circulaires empêche l'utilisation du dispositif de piégeage sur des arbres dont la section transversale du tronc présente un rayon supérieur à celui des éléments identiques emboîtables semi-circulaires.

Le document DE 37 28 731 C1 décrit une barrière de protection contre les escargots et limaces pour protéger les cultures. La barrière est composée de plusieurs tronçons fabriqués séparément et assemblés les uns aux autres par une liaison d'encastrement. Les moyens de connexion entre les différents tronçons n'autorisent aucune rotation. Au contraire, il est nécessaire qu'il ne se produise aucune rotation entre les différents tronçons pour que la barrière garde une forme structurelle lui permettant de s'opposer aux escargots et limaces.

Le document FR 2 946 834 A1 décrit un dispositif à collier souple en un seul morceau. Il n'est pas prévu de pouvoir ajouter un tronçon de collier pour en adapter la longueur au périmètre du tronc de l'arbre.

Le document US 2,999,479 A décrit une collerette annulaire dont le bord intérieur est muni d'entailles radiales pour former des lamelles destinée à se plier plus ou moins lors de la pose de la collerette autour du tronc d'un arbre. L'écart entre les lamelles dépend du diamètre du tronc de l'arbre sur lequel est posée la collerette. L'effet de piégeage n'est donc pas garanti, car l'écart entre lamelle peut suffire sur certains arbres pour laisser s'échapper des animaux nuisibles entre le tronc de l'arbre et le dispositif de piégeage.

Le document US 2,261,454 A décrit un dispositif selon le préambule de la revendication 1. Les tronçons de collier sont connectés les uns aux autres de façon amovible par l'intermédiaire de vis rapportées ou de façon inamovible par l'intermédiaire de rivets.

Un problème proposé par la présente invention est de concevoir un dispositif de piégeage efficace, à bonne tenue dans le temps, et dont l'installation soit facile et rapide.

Simultanément, l'invention vise à concevoir un dispositif de piégeage qui s'adapte facilement à la forme le plus souvent non circulaire de la périphérie du tronc des arbres.

Pour atteindre ces objets ainsi que d'autres, l'invention propose un dispositif de piégeage d'animaux nuisibles tels que les chenilles, comportant un collier conformé pour entourer le tronc d'un arbre, ledit collier comprenant un trottoir sensiblement annulaire s'étendant sensiblement dans un premier plan destiné à être orienté horizontalement, dans lequel le collier est au moins en partie constitué par une pluralité de tronçons de collier reliés entre eux de façon amovible par des moyens de connexion conformés de façon à ce que chaque tronçon de collier est relié aux tronçons de collier adjacents de façon pivotante autour d'axes orientés selon une première direction sensiblement perpendiculaire au premier plan, dans lequel :
- chaque tronçon de collier s'étend entre deux extrémités,
- chaque tronçon de collier comporte à une de ses extrémités un axe de pivot orienté selon la première direction,
- chaque tronçon de collier comporte à l'autre de ses extrémités des moyens de réception de l'axe de pivot d'un tronçon de collier adjacent ;
selon l'invention, les moyens de réception comportent, à distance l'un de l'autre selon la première direction :
- un premier logement cylindrique de réception orienté selon la première direction,
- un second logement cylindrique de réception orienté selon la première direction et muni d'une fente latérale d'introduction.

Du fait que les moyens de connexion autorisent un pivotement des tronçons de collier adjacents les uns par rapport aux autres, le collier peut suivre au plus près le contour du tronc de l'arbre et s'adapte au mieux à la périphérie généralement non circulaire du tronc de l'arbre. Cette adaptation ne nécessite pas d'avoir recours à de multiples pièces rapportées telles que des cales d'ajustement. L'unique degré de liberté en pivotement entre les tronçons de collier successifs permet une manipulation aisée du dispositif de piégeage, les mouvements relatifs entre les tronçons de collier adjacents étant limités en pratique à un simple pivotement dans un plan.

La longueur du collier peut être librement ajustée par l'ajout ou le retrait de tronçons de collier afin d'adapter la longueur totale du collier au périmètre de l'arbre.

Chaque tronçon de collier est muni d'un axe de pivot et de moyens de réception permettant une connexion fiable et rapide avec les tronçons adjacents de collier.

La présence des premier et second logements cylindriques de réception permet une connexion manuelle, simple et rapide entre les tronçons de collier, comme il sera expliqué ultérieurement.

Le premier logement cylindrique de réception étant fermé selon sa périphérie, on limite efficacement les risques d'une déconnexion accidentelle entre deux tronçons adjacents lorsqu'il se produit un effort tendant à déplacer deux tronçons adjacents l'un à l'écart de l'autre.

Avantageusement, chaque tronçon de collier peut être formé d'une seule pièce avec son axe de pivot et ses moyens de réception respectifs. La connexion des tronçons de collier ne nécessite ainsi aucun outil ni aucune pièce rapportée pouvant être accidentellement perdue.

Les tronçons de collier peuvent être de préférence fabriqués en matière plastique. Le plastique présente une bonne résistance aux conditions environnementales extérieures et permet en outre une réalisation peu onéreuse par injection plastique malgré les formes complexes que peuvent présenter les tronçons de collier.

De préférence, on peut prévoir que :
- la fente latérale d'introduction présente une largeur inférieure au diamètre de l'axe de pivot d'un tronçon de collier adjacent,
- le second logement cylindrique de réception est fabriqué en un matériau présentant une élasticité suffisante pour autoriser le montage en force de l'axe de pivot d'un tronçon de collier adjacent dans le second logement cylindrique de réception, à travers la fente latérale d'introduction.

De tels moyens de connexion sont simples et rapides à mettre en oeuvre sur place et ne nécessitent aucun outillage tant pour l'assemblage des tronçons de collier que pour leur séparation.

Avantageusement, le dispositif peut comporter des moyens de barrière, de préférence une paroi périphérique latérale s'étendant depuis et à l'écart du trottoir sensiblement annulaire selon la première direction sensiblement perpendiculaire au premier plan. En alternative ou en complément, les moyens de barrière peuvent comporter un caniveau rempli d'une substance liquide ou solide destinée à tuer ou à repousser les animaux nuisibles, ou peuvent comporter une substance adhésive ou gluante disposée sur le trottoir pour retenir les animaux nuisibles.

Selon une première configuration, le collier peut comprendre des tronçons de collier tous identiques entre eux. N'ayant qu'un unique type de tronçons de collier, les tronçons de collier du dispositif de piégeage peuvent être fabriqués en grande série, par exemple par un procédé de moulage par injection à l'aide d'un unique moule, afin de procurer une fabrication peu onéreuse d'un dispositif de piégeage. Selon une deuxième configuration, le collier peut comporter :
- des tronçons de collier dépourvus de moyens d'ouverture, qui sont tous identiques entre eux,
- au moins un tronçon de collier muni de moyens d'ouverture comportant un orifice dans le trottoir permettant un échappement dirigé des animaux nuisibles confinés dans le volume compris entre le tronc de l'arbre, le trottoir et la paroi périphérique latérale.

Il est ainsi possible d'utiliser le dispositif de piégeage pour canaliser et capturer les animaux nuisibles même lorsque la quantité d'animaux nuisibles est trop grande pour rester contenue sur le collier. Le dispositif de piégeage peut donc garder des dimensions raisonnables, indépendamment de la quantité d'animaux nuisibles à capturer.

Dans cette deuxième configuration, le dispositif de piégeage ne comporte que deux types de tronçons de collier, ce qui permet malgré tout de fabriquer les différents tronçons de collier du dispositif de piégeage en grande série, par exemple par un procédé de moulage par injection à l'aide de seulement deux moules, afin de procurer une fabrication peu onéreuse d'un dispositif de piégeage capable de canaliser et capturer les animaux nuisibles.

Avantageusement, le dispositif de piégeage peut comporter des moyens de tenue d'un tuyau dans l'orifice. Ce tuyau permet d'accompagner les animaux nuisibles de façon douce et progressive pour les amener dans un conteneur prévu pour leur capture. En effet, les animaux nuisibles tels que les chenilles ne franchissent pas les brusques différences de hauteur.

De préférence, le dispositif de piégeage peut comprendre des moyens de retenue amovibles d'un conteneur destiné à recevoir et contenir les animaux nuisibles s'échappant par l'orifice. Les moyens de retenue amovibles permettent de changer périodiquement le conteneur avant que celui-ci soit rempli d'animaux nuisibles et ne puisse plus en recevoir. On peut ainsi fixer un conteneur vide pour poursuivre le piégeage, et ce sans démonter le dispositif de piégeage du tronc de l'arbre. Cela est particulièrement utile étant donné qu'à ce moment le volume compris entre le tronc de l'arbre, le trottoir et la paroi périphérique latérale contient des animaux nuisibles qu'il convient d'éviter de libérer ou de perturber.

Avantageusement, les moyens de retenue amovibles peuvent comprendre un filetage intérieur pour retenir par vissage un conteneur de type bouteille à goulot muni d'un filetage extérieur. La liaison entre le conteneur et le dispositif de piégeage est à la fois simple et efficace car rigoureusement étanche pour ne laisser s'échapper aucun animal nuisible.

De préférence, le dispositif de piégeage peut comporter un ou plusieurs adaptateurs destinés à se visser dans le filetage intérieur des moyens de retenue amovibles, et comportant respectivement un filetage intérieur de dimensions différentes de celles du filetage intérieur des moyens de retenue amovibles. Les adaptateurs permettent un ajustement du filetage intérieur sur lequel se visse le conteneur. On peut ainsi utiliser des conteneurs en matière plastique peu onéreux et faciles à trouver, tels que les bouteilles d'eau minérale d'une capacité de cinq litres dont le goulot est en général fabriqué selon deux dimensions standards.

Avantageusement, on peut prévoir que les tronçons de collier comportent chacun :
- un tronçon de trottoir,
- au moins une languette s'étendant depuis et en prolongement du tronçon de trottoir, destinée à venir à recouvrement au moins partiel du tronçon de trottoir d'un tronçon de collier adjacent.

Le recouvrement entre la languette et le tronçon de trottoir du tronçon de collier adjacent permet d'assurer une continuité satisfaisante du trottoir sensiblement annulaire pour éviter la présence d'interstices à travers lesquels les animaux nuisibles pourraient s'échapper ou qui pourraient gêner la bonne circulation des animaux nuisibles sur le trottoir sensiblement annulaire pour rejoindre, le cas échéant, l'orifice dans le trottoir permettant un échappement dirigé des animaux nuisibles vers le conteneur de capture.

De préférence, les tronçons de collier comportent chacun un tronçon de trottoir à bord intérieur libre courbe concave. Les tronçons de collier ont ainsi un bord intérieur libre conformé pour épouser au mieux la forme extérieure convexe du tronc d'arbre.

Avantageusement, le dispositif de piégeage peut comporter des moyens de jonction souples destinés à joindre le collier avec le tronc de l'arbre. Les moyens de jonction permettent d'assurer une étanchéité parfaite entre le tronc de l'arbre et le dispositif de piégeage pour éviter que des animaux nuisibles passent entre ceux-ci.

De préférence, les moyens de jonction comprennent un arrangement de poils souples de densité adaptée pour empêcher le passage des animaux nuisibles. Dirigés en direction de l'arbre à entourer, les poils souples adaptent de façon fine et précise le dispositif de piégeage au contour convexe irrégulier de l'arbre, au besoin en pénétrant dans les creux de l'écorce, et bloquent ainsi efficacement les animaux nuisibles. Des essais ont démontré la très grande efficacité de tels moyens de jonction lors du piégeage de chenilles processionnaires. Et de tels moyens de jonction sont rapides et faciles à mettre en place mais également à retirer sans affecter l'arbre, contrairement à un joint réalisé par du mastic notamment qui marque l'écorce de l'arbre et l'arrache partiellement lors d'un retrait.

Avantageusement, l'arrangement de poils souples peut être un joint à poils souples, rapporté et fixé sur le trottoir sensiblement annulaire. L'espace entre les poils ne dépend ainsi pas du diamètre de l'arbre sur lequel est fixé le dispositif de piégeage.

De préférence, le dispositif de piégeage comprend des moyens de maintien en orientation fixe du joint à poils souples dans une orientation prédéterminée par rapport au trottoir sensiblement annulaire. De tels moyens de maintien forcent les poils souples à pénétrer dans les creux de l'écorce pour bloquer efficacement les animaux nuisibles.

De façon pratique, on peut disposer de moyens de maintien satisfaisants en prévoyant que :
- le joint à poils souples comporte un corps de base semi-rigide à section transversale non circulaire depuis lequel s'étendent les poils souples,
- le collier comporte des lumières de réception du joint à poils souples, à section transversale non circulaire de forme sensiblement complémentaire à la section transversale non circulaire du corps de base du joint à poils souples.

Avantageusement, le trottoir sensiblement annulaire peut être pourvu de trous dimensionnés de façon à évacuer les eaux de pluie sans pour autant autoriser le passage des animaux nuisibles à piéger. Cela évite, en cas de forte pluie, une montée du niveau d'eau dans le collier, qui permettrait aux animaux nuisibles de flotter et de s'échapper avec le trop-plein.

A noter que l'évacuation des eaux de pluie peut être assurée de façon alternative ou complémentaire par les moyens de jonction à arrangement de poils souples dont la densité et la rigidité peuvent aisément être choisies par l'homme du métier pour permettre simultanément une évacuation des eaux de pluie et permettre une retenue des animaux nuisibles.

D'autres objets, caractéristiques et avantages de la présente invention ressortiront de la description suivante de modes de réalisation particuliers, faite en relation avec les figures jointes, parmi lesquelles :
- la figure 1 est une vue en perspective d'un dispositif de piégeage selon un mode réalisation particulier de l'invention ;
- la figure 2 est une vue de dessus du dispositif de piégeage de la figure 1 ;
- la figure 3 est une vue de dessous du dispositif de piégeage de la figure 1 ;
- la figure 4 est une vue en perspective d'un premier type de tronçon de collier ;
- la figure 5 est une vue en coupe du tronçon de collier de la figure 4 ;
- les figures 6 à 8 sont des vues en perspective de l'assemblage de deux tronçons de collier du premier type illustré sur la figure 4 ;
- la figure 9 est une vue en coupe d'un deuxième type de tronçon de collier auquel est connecté un conteneur destiné à recevoir et contenir les animaux nuisibles ; et
- la figure 10 est une vue en perspective éclatée du tronçon de collier du deuxième type illustré sur la figure 9.

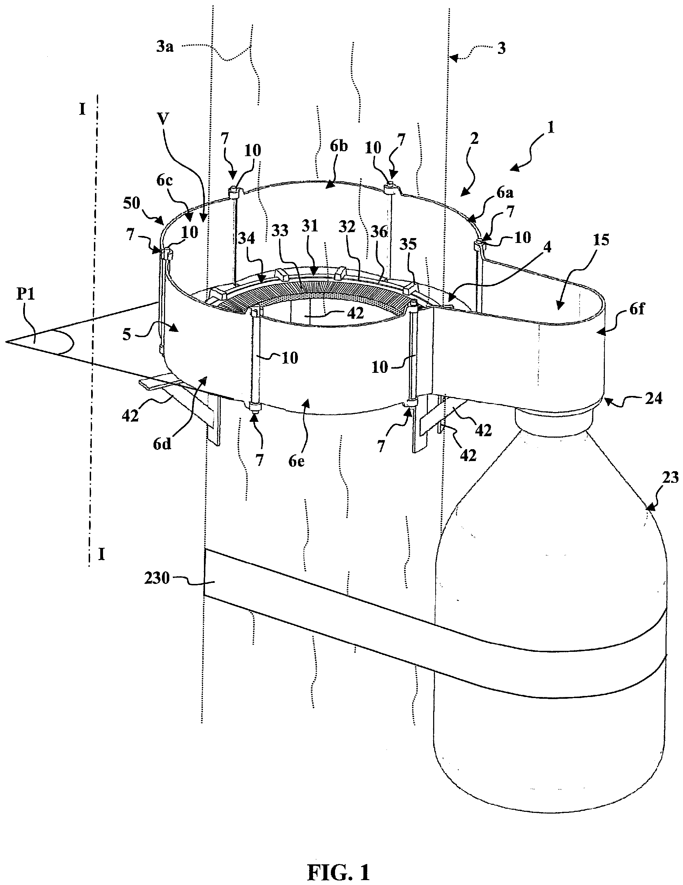

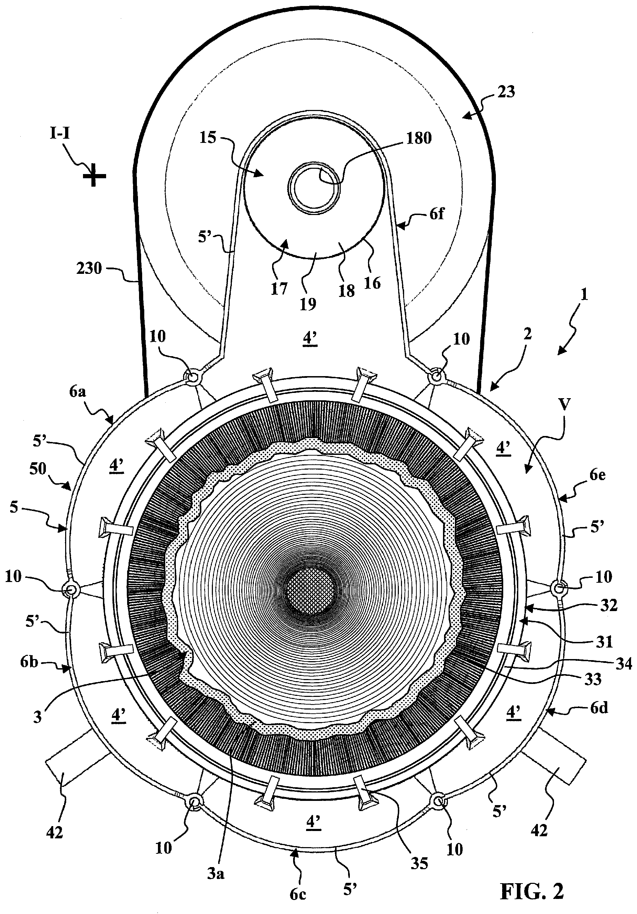

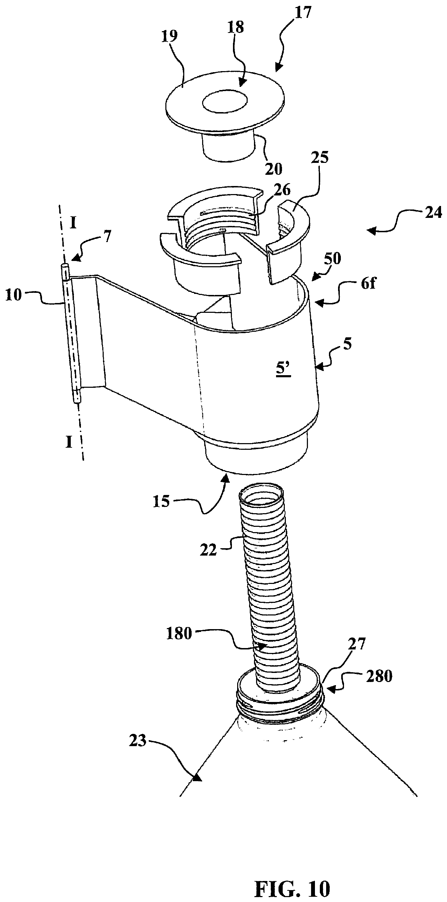

Les figures 1 à 10 illustrent un mode de réalisation particulier d'un dispositif 1 de piégeage d'animaux nuisibles tels que des chenilles.

Le dispositif 1 comporte un collier 2 conformé pour entourer le tronc d'un arbre 3, ledit collier 2 comprenant :
- un trottoir 4 sensiblement annulaire s'étendant sensiblement dans un premier plan P1 destiné à être orienté horizontalement,
- des moyens de barrière 50 comportant une paroi périphérique latérale 5 s'étendant depuis et à l'écart du trottoir 4 sensiblement annulaire selon une première direction I-I sensiblement perpendiculaire au premier plan P1.

Le trottoir 4 présente une largeur suffisante pour que, en position d'utilisation autour du tronc de l'arbre 3, la paroi périphérique latérale 5 soit écartée du tronc de l'arbre 3 selon une distance supérieure à la distance pouvant être franchie par les chenilles processionnaires. Une largeur de 2 centimètres peut convenir.

Le trottoir 4 sensiblement annulaire à paroi périphérique latérale 5 est constitué par une pluralité de tronçons de collier 6a à 6f reliés entre eux par des moyens de connexion 7. Les moyens de connexion 7 sont conformés de façon à ce que chaque tronçon de collier 6a à 6f est relié aux tronçons de collier adjacents 6a, 6b, 6c, 6d, 6e, ou 6f de façon pivotante selon la première direction I-I. Cela permet aux tronçons de collier 6a à 6f, et donc au collier 2, de suivre au plus près le contour convexe du tronc de l'arbre 3 dont la section transversale n'est jamais rigoureusement circulaire.

Les moyens de connexion 7 sont en outre conformés de façon à ce que chaque tronçon de collier 6a à 6f est relié aux tronçons de collier adjacents 6a, 6b, 6c, 6d, 6e, ou 6f de façon amovible afin de pouvoir aisément modifier la longueur du collier 2 pour l'adapter au mieux au périmètre du tronc de l'arbre 3.

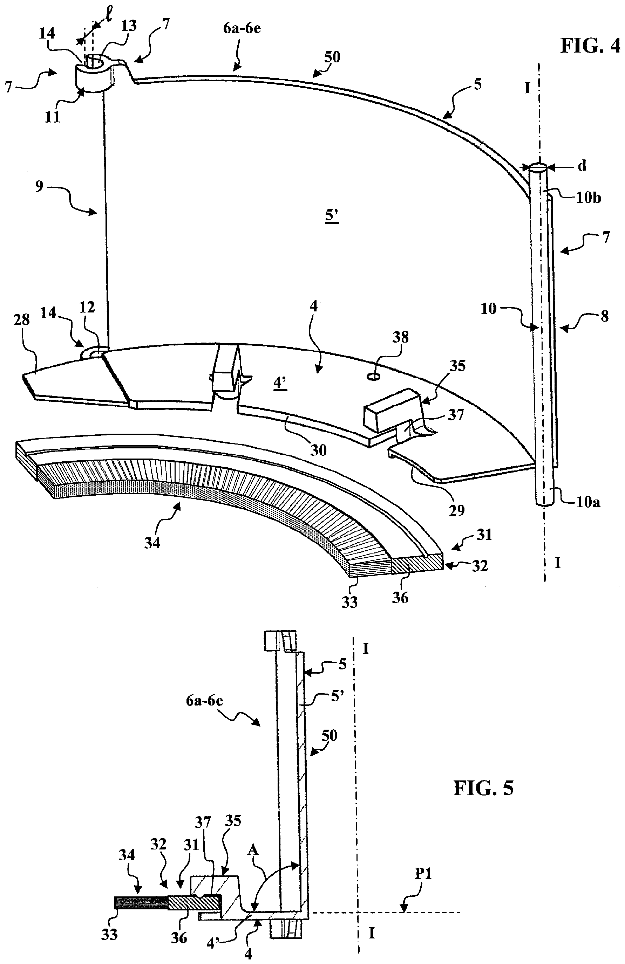

On voit plus particulièrement sur la figure 4 que chaque tronçon de collier 6a à 6e s'étend entre deux extrémités 8 et 9. A leur extrémité 8, les tronçons de collier 6a à 6e comportent un axe de pivot 10 orienté selon la première direction I-I. A leur autre extrémité 9, les tronçons de collier 6a à 6e comportent des moyens de réception 11 de l'axe de pivot 10 d'un tronçon de collier adjacent 6a, 6b, 6c, 6d, 6e, ou 6f. Il en est de même pour le tronçon de collier 6f.

De façon plus particulière, les moyens de réception 11 comportent, à distance l'un de l'autre selon la première direction I-I :
- un premier logement cylindrique de réception 12 orienté selon la première direction I-I,
- un second logement cylindrique de réception 13 orienté selon la première direction I-I et muni d'une fente latérale d'introduction 14.

La fente latérale d'introduction 14 présente une largeur ℓ inférieure au diamètre d de l'axe de pivot 10 d'un tronçon de collier adjacent 6a, 6b, 6c, 6d, 6e, ou 6f. Le second logement cylindrique de réception 13 est fabriqué en un matériau présentant une élasticité suffisante pour autoriser le montage en force de l'axe de pivot 10 d'un tronçon de collier adjacent 6a, 6b, 6c, 6d, 6e, ou 6f dans le second logement cylindrique de réception 13, à travers la fente latérale d'introduction 14. La largeur ℓ de la fente latérale d'introduction 14 peut ainsi momentanément augmenter sous l'effet de la force de montage pour laisser passer l'axe de pivot 10 pour sa réception dans le second logement cylindrique de réception 13, et peut ensuite reprendre sa largeur ℓ initiale inférieure au diamètre d de l'axe de pivot 10 pour retenir ce dernier dans le second logement cylindrique de réception 13.

Chaque tronçon de collier 6a à 6f est fabriqué en une seule pièce avec ses moyens de connexion 7 comprenant un axe de pivot 10 et des moyens de réception 11, ce qui permet une connexion fiable et rapide de chaque tronçon de collier 6a, 6b, 6c, 6d, 6e ou 6f avec des tronçons de collier adjacents 6a, 6b, 6c, 6d, 6e ou 6f sans avoir recours à des pièces rapportées ou à des outils.

Une fabrication en matière plastique des tronçons de collier 6a à 6f permet d'endurer les conditions météorologiques extérieures sans affecter le fonctionnement du piège, et permet une fabrication à coût raisonnable malgré la complexité de forme des tronçons de collier 6a à 6f.

Le collier 2 illustré sur les figures 1 à 3 comporte :
- des tronçons de collier 6a à 6e dépourvus de moyens d'ouverture 15, qui sont tous identiques entre eux,
- un tronçon de collier 6f muni de moyens d'ouverture 15 comportant un orifice 16 dans le trottoir 4.

Les moyens d'ouverture 15 permettent un échappement dirigé des animaux nuisibles confinés dans le volume V compris entre le tronc de l'arbre 3, le trottoir 4 et la paroi périphérique latérale 5 lorsqu'ils sont en nombre trop important pour rester sur le collier 2.

Dans une autre configuration, le collier 2 peut ne comporter que des tronçons de collier tous identiques entre eux. Pour ce faire, il suffit de remplacer le tronçon de collier 6f à moyens d'ouverture 15 par un tronçon de collier identique aux tronçons de collier 6a à 6e. Une telle configuration de collier 2 peut être utilisée lorsqu'il n'est pas besoin de canaliser et capturer les animaux nuisibles, par exemple lorsqu'une substance répulsive, capable de tuer les animaux nuisibles, adhésive ou gluante est disposée sur le trottoir 4.

En pratique, les tronçons de collier 6a à 6f sont rigides. Ceux-ci sont par exemple fabriqués par injection de matière plastique.

Dans le mode de réalisation illustré sur les figures, le tronçon de collier 6f à moyens d'ouverture 15 permet un échappement dirigé des animaux nuisibles confinés vers un conteneur 23 duquel les animaux nuisibles ne pourront pas ressortir et qui, une fois plein, pourra soit être détruit avec les animaux nuisibles qu'il contient, soit être vidé de ceux-ci puis réutilisé.

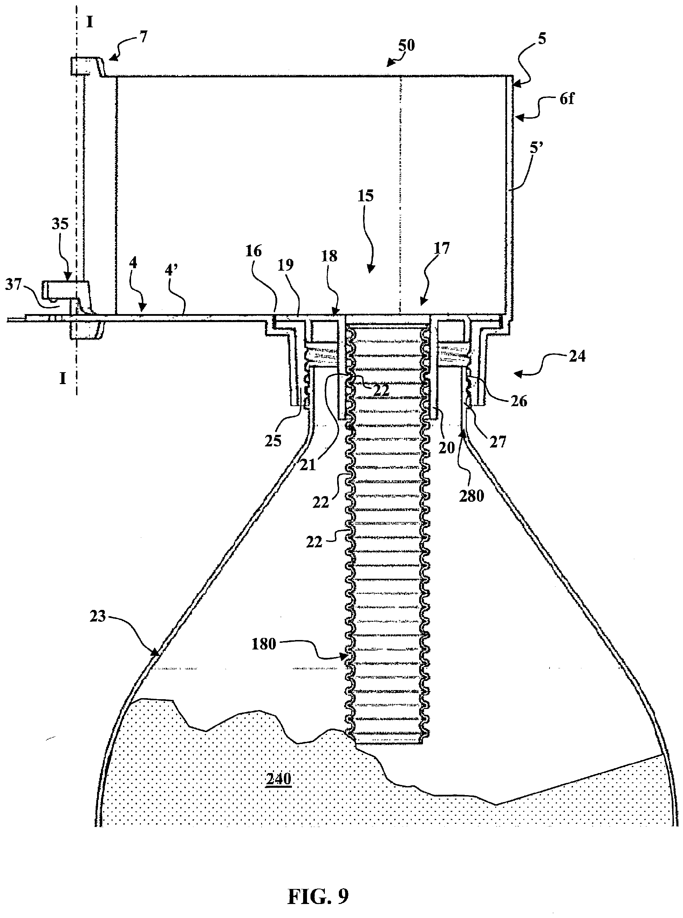

Afin de permettre une descente progressive et non rédhibitoire pour les animaux nuisibles vers l'intérieur du conteneur 23, le dispositif 1 comporte des moyens de tenue 17 d'un tuyau 180 dans l'orifice 16 comme il est plus particulièrement illustré sur la figure 9. En l'espèce, les moyens de tenue 17 comportent une bague 18 à épanouissement radial supérieur 19 venant s'emboiter selon sa périphérie dans l'orifice 16. La bague 18 présente un tronçon tubulaire 20 muni sur sa surface latérale intérieure d'une excroissance se présentant sous la forme d'une nervure annulaire 21. La nervure annulaire 21 est conformée et dimensionnée de façon à pénétrer dans au moins une gorge annulaire 22 que présente la surface latérale extérieure du tuyau 180. Cette coopération de la nervure annulaire 21 avec ladite au moins une gorge annulaire 22 permet une retenue axiale du tuyau 180 selon la première direction I-I par rapport au tronçon de collier 6f.

Sur la figure 9, on voit que le tuyau 180 accompagne la descente des animaux nuisibles depuis le trottoir 4 vers l'intérieur du conteneur 23 jusqu'à amener les animaux nuisibles, en sortie de tuyau 180, sur un matériau 240 tel qu'un mélange de terre et d'épines de pin dans lequel les chenilles processionnaires vont s'enfouir pour se transformer en chrysalides.

Le conteneur 23 destiné à recevoir et contenir les animaux nuisibles s'échappant du collier 2 par l'orifice 16 est fixé au tronçon de collier 6f par des moyens de retenue 24 amovibles. Les moyens de retenue 24 amovibles comportent une bague 25 s'encastrant selon sa périphérie dans l'orifice 16, et munie d'un filetage intérieur 26 apte à coopérer par vissage avec le filetage extérieur 27 du goulot 280 du conteneur 23 qui est une bouteille en matière plastique de grande capacité disponible dans le commerce (par exemple une bouteille d'un volume intérieur de cinq litres environ).

Il est possible de visser un conteneur 23 à goulot 280 d'une dimension différente en prévoyant une pluralité de bagues 25 dont l'épaisseur est adaptée de façon que le filetage intérieur 26 corresponde aux différents filetages standards existants sur le marché. En alternative ou en complément, on peut prévoir un ou plusieurs adaptateurs destinés à se visser dans le filetage intérieur 26 de la bague 25, et comportant respectivement un filetage intérieur de dimensions différentes de celles du filetage intérieur 26 de la bague 25.

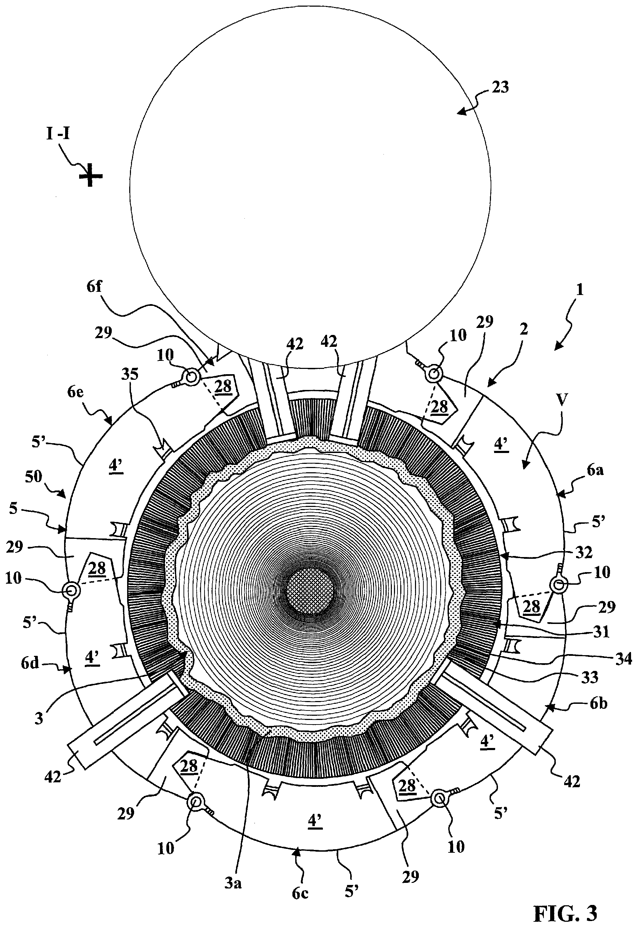

Sur les figures 3 et 4, on voit que les tronçons de collier 6a à 6f comportent chacun :
- un tronçon de trottoir 4' (ainsi qu'un tronçon de paroi périphérique latérale 5'),
- au moins une languette 28 s'étendant depuis et en prolongement du tronçon de trottoir 4', destinée à venir à recouvrement au moins partiel du tronçon de trottoir 4' d'un tronçon de collier adjacent 6a, 6b, 6c, 6d, 6e, ou 6f.

Ce recouvrement est plus particulièrement visible sur la figure 3 sur laquelle on constate en outre la présence de logements 29 en creux destinés à recevoir la languette 28 dans la zone de recouvrement.

Sur les figures 3 et 4, on constate que les tronçons de collier 6a à 6f comportent chacun un tronçon de trottoir 4' à bord intérieur libre 30 courbe concave permettant d'épouser au mieux la forme extérieure convexe du tronc de l'arbre 3.

Sur la figure 5, qui est une vue en coupe de l'un des tronçons de collier 6a à 6e, on constate que les tronçons de collier 6a à 6e présentent une section transversale sensiblement en forme de L par leur trottoir 4 et leur paroi périphérique latérale 5. Il est à noter que l'angle A entre le trottoir 4 et la paroi périphérique latérale 5 (qui est ici de 90°) peut être augmenté au-delà de 90° en fonction des utilisations prévues et des animaux nuisibles à piéger, afin d'adapter aux animaux à piéger la distance entre le tronc d'arbre et la paroi périphérique latérale 5. On peut par exemple prévoir un angle A supérieur à 90°.

Sur les figures 1 à 5, on distingue des moyens de jonction 31 souples destinés à joindre le collier 2 avec le tronc de l'arbre 3 qui présente, sur sa circonférence, de nombreuses irrégularités dues à la présence de creux et de bosses dans l'écorce 3a de l'arbre 3. Ces moyens de jonction 31 souples comprennent un arrangement 32 de poils 33 souples de densité adaptée pour empêcher le passage des animaux nuisibles. Pour plus de commodité de manipulation et d'installation, l'arrangement 32 de poils 33 souples est un joint à poils souples 34. De bons résultats ont été obtenus avec des joints brosses vendus sous la dénomination commerciale STRIBO FLEX par la société KOTI INDUSTRIEL EN TECHNISCH BORSTELWERK BV. Le joint à poils souples 34 est rapporté et fixé sur le trottoir 4 sensiblement annulaire.

Dans le mode de réalisation illustré sur les figures 1 à 5, le joint à poils souples 34 est rapporté et fixé sur le trottoir 4 de façon amovible. Le dispositif 1 comprend des moyens de maintien 35 en orientation fixe du joint à poils souples 34 dans une orientation prédéterminée par rapport au trottoir 4 sensiblement annulaire. En l'espèce, le joint à poils souples 34 comporte un corps de base 36 semi-rigide à section transversale non circulaire, et depuis lequel s'étendent les poils 33 souples parallèlement au premier plan P1. Le collier 2 comporte des lumières de réception 37 du joint à poils souples 34, à section transversale non circulaire et de forme sensiblement complémentaire à la section transversale non circulaire du corps de base 36, comme il est plus particulièrement visible sur la figure 5. La section transversale non circulaire des lumières de réception 37 est conformée pour recevoir et retenir (par encliquetage ou engagement en force par exemple) le corps de base 36 du joint à poils souples 34.

Sur la figure 4, on voit que le tronçon de trottoir 4' est pourvu d'un trou 38 dimensionné de façon à évacuer les eaux de pluie sans pour autant autoriser le passage des animaux nuisibles à piéger. La dimension des trous 38 est choisie inférieure à la taille des animaux nuisibles à piéger.

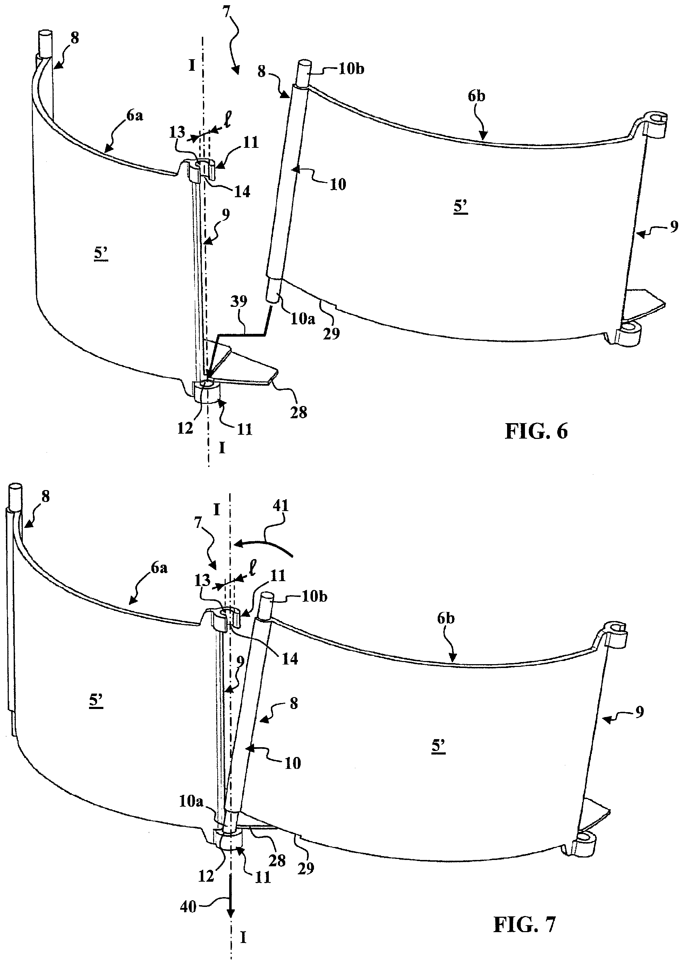

Les figures 6 à 8 sont des vues en perspective illustrant l'assemblage de deux tronçons de collier 6a et 6b.

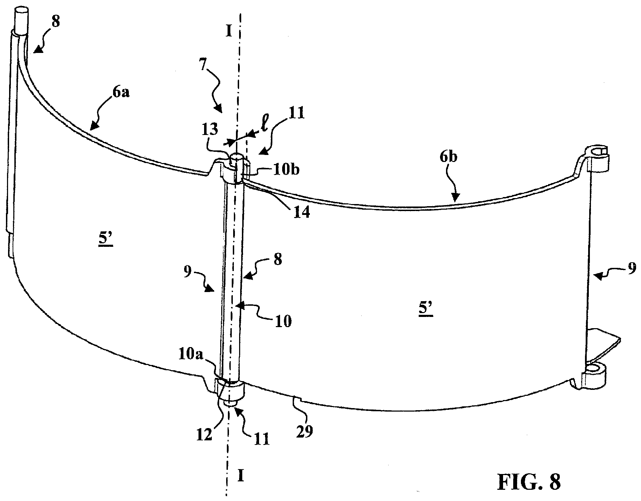

Le tronçon de collier 6a est tenu immobile tandis que le tronçon de collier 6b est approché de façon oblique pour engager l'extrémité inférieure 10a de l'axe de pivot 10 du tronçon de collier 6b dans le premier logement cylindrique de réception 12 porté à l'extrémité 9 du tronçon de collier 6a. Pour ce faire, on effectue un mouvement illustré par la flèche 39. Les tronçons de collier 6a et 6b se trouvent alors dans la disposition illustrée sur la figure 7 dans laquelle l'extrémité inférieure 10a de l'axe de pivot 10 commence à pénétrer dans le premier logement cylindrique de réception 12. On poursuit ensuite la pénétration de l'extrémité inférieure 10a dans le premier logement cylindrique de réception 12 selon un mouvement sensiblement illustré par la flèche 40. Simultanément, on effectue un mouvement de basculement du tronçon de collier 6b par rapport au tronçon de collier 6a, comme illustré par la flèche 41, pour amener l'extrémité supérieure 10b de l'axe de pivot 10 dans la fente latérale d'introduction 14. Une légère force latérale de montage est appliquée sur l'extrémité supérieure 10b pour forcer la pénétration de celle-ci dans le second logement cylindrique de réception 13 en provoquant un agrandissement de la largeur ℓ de la fente latérale d'introduction 14 qui reprend ensuite sa largeur f initiale par élasticité. On se trouve alors dans la configuration relative illustrée sur la figure 8 dans laquelle les tronçons de collier 6a et 6b sont connectés l'un à l'autre et peuvent pivoter l'un par rapport à l'autre par rotation autour de la première direction I-I. Les tronçons de trottoir 4' se trouvent dans un seul et même plan.

La séparation des tronçons de collier 6a et 6b s'effectue en réalisant une manipulation inverse à celle décrite précédemment à l'aide de la succession des figures 6 à 8.

On comprend que le collier 2 du dispositif 1 selon l'invention peut être allongé ou raccourci à volonté par ajout ou retrait d'un tronçon de collier, en vue de présenter une longueur totale compatible avec le périmètre de l'arbre 3 sur lequel le dispositif 1 est destiné à être mis en place. Les moyens de jonction 31 permettent, par leur déformation, d'adapter le dispositif 1 de façon parfaite au contour irrégulier du tronc de l'arbre 3 avec une certaine tolérance. En particulier, plus les poils 33 souples sont longs, plus la tolérance d'ajustement du dispositif 1 au contour de l'arbre 3 sera élevée. Il faut toutefois se garder d'avoir recours à des poils 33 souples de longueur trop importante si leur rigidité et leur densité ne suffisaient pas pour empêcher le passage d'animaux nuisibles.

En pratique, de bons résultats ont été obtenus avec l'utilisation de poils 33 présentant une longueur comprise entre environ 20 millimètres et environ 60 millimètres.

L'utilisation d'un dispositif 1 selon l'invention va désormais être décrite dans le cadre du piégeage de chenilles processionnaires du pin.

Lorsqu'un arbre 3 est envahi dans son branchage par des chenilles processionnaires, ces chenilles effectuent à un moment déterminé une procession de nymphose en descendant les unes derrières les autres le long du tronc de l'arbre 3 pour atteindre le sol afin de s'y enterrer et se transformer en chrysalides.

Avant cette procession de nymphose, on place le dispositif 1 sur le tronc de l'arbre 3 comme illustré sur la figure 1. Pour ce faire, on commence par assembler un nombre suffisant de tronçons de collier 6a à 6f pour que le dispositif 1 présente une longueur totale suffisante pour entourer le tronc de l'arbre 3. Dans le mode de réalisation illustré sur les figures 1 à 3, le dispositif 1 comporte ainsi six tronçons de collier 6a à 6f reliés les uns aux autres par les moyens de connexion 7. L'assemblage de ces tronçons de collier 6a à 6f s'effectue comme expliqué précédemment en lien avec les figures 6 à 8. Une fois que les tronçons 6a à 6f sont reliés les uns aux autres, on dispose d'un collier 2 articulé capable de se plier et se déplier dans un plan P1 destiné à être orienté horizontalement. Les moyens de jonction 31 sont rapportés et fixés au trottoir 4 sensiblement annulaire formé par la mise bout à bout de tronçons de trottoir 4'. Les tronçons de paroi périphérique latérale 5' forment quant à eux des moyens de barrière 50 à paroi périphérique latérale 5 continue.

Avant la mise en place du dispositif 1 autour du tronc de l'arbre 3, deux tronçons de collier, par exemple les tronçons de colliers 6a et 6f, sont laissés détachés. L'utilisateur entoure alors le tronc de l'arbre 3 avec le collier 2 qui se déploie dans le plan P1 horizontal et vient relier les tronçons de collier 6a et 6f par leurs moyens de connexion 7 de façon à former un collier 2 annulaire continu autour du tronc de l'arbre 3.

Lors de cette mise en place, les moyens de connexion 7, grâce à la liaison pivotante qu'ils procurent entre chacun des tronçons de collier adjacents 6a à 6f, autorisent le collier 2 à prendre une forme qui suit les irrégularités de la périphérie du tronc de l'arbre 3, qui n'est jamais rigoureusement circulaire.

Toujours pendant cette mise en place, les poils 33 des moyens de jonction 31 souples viennent assurer une jonction parfaite entre le dispositif 1 et le tronc de l'arbre 3. L'arrangement 32 de poils 33 souples est disposé selon une orientation fixe grâce aux moyens de maintien 35, avec les poils 33 orientés en s'étendant depuis et à l'écart du trottoir 4 sensiblement annulaire. Les poils 33 sont ainsi dirigés vers l'arbre 3 pour venir, par leurs extrémités libres, au contact de l'écorce 3a de l'arbre 3 en pénétrant dans les irrégularités en creux de l'écorce 3a de l'arbre 3 et en se repliant lorsque l'écorce 3a de l'arbre 3 présente des bosses.

Pour assurer un maintien horizontal du premier plan P1, on peut en outre prévoir des équerres de fixation 42 destinées à venir simultanément en appui contre l'arbre 3 et sous le trottoir 4 sensiblement annulaire.

Pour compléter l'installation, on insère la bague 25 à filetage intérieur 26 dans l'orifice 16 prévu dans le tronçon de collier 6f, puis on insère la bague 18 à laquelle est fixé le tuyau 180 dans l'orifice 16.

Enfin, on met en place par vissage le conteneur 23 en engageant le goulot 280 à filetage extérieur 27 dans le filetage intérieur 26 de la bague 25 après avoir en partie rempli le conteneur 23 d'un matériau 240 à base de terre et d'épines de pin.

On se trouve alors dans la configuration illustrée sur la figure 1. En alternative ou en complément aux équerres 42, on peut enserrer le conteneur 23 et l'arbre 3 par un lien tel qu'une sangle 230, ce qui aura pour effet de maintenir fixe le dispositif 1 sur l'arbre 3.

En alternative ou en complément aux équerres 42 et à la sangle 230, le dispositif 1 peut être disposé sur l'arbre 3 à une hauteur telle que le conteneur 23 repose sur le sol et que cet appui contribue à stabiliser le dispositif 1 sur le tronc de l'arbre 3.

Lorsque les chenilles processionnaires entament leur procession de nymphose pour descendre de l'arbre 3, elles atteignent le dispositif 1 disposé sur le tronc de l'arbre 3. Les poils 33 souples des moyens de jonction 31 souples empêchent les chenilles de passer entre le dispositif 1 et le tronc de l'arbre 3. Les chenilles sont amenées à se répartir et à circuler sur le trottoir 4 sensiblement annulaire d'où elles s'échappent par l'orifice 16 des moyens d'ouverture 15 prévus dans le tronçon de collier 6f. Lors de leur descente, elles empruntent le tuyau 180 qui leur permet de descendre de façon douce et progressive jusqu'au matériau 240 présent dans le conteneur 23, et dans lequel elles vont s'enterrer pour effectuer leur transformation en chrysalides.

Lorsque le conteneur 23 est totalement rempli de chenilles, l'utilisateur dévisse le conteneur 23 du filetage intérieur 26 de la bague 25 pour le remplacer par un autre conteneur 23. Le conteneur 23 rempli de chenilles est alors fermé de façon étanche à l'aide d'un bouchon se vissant sur le goulot 280 fileté, et est ensuite évacué pour procéder à la destruction des animaux nuisibles. Le conteneur 23 étant du type bouteille d'eau minérale de grande capacité, présente une grande solidité et est difficilement perçable, de sorte qu'il peut être manipulé sans crainte malgré la quantité importante de chenilles hautement nuisibles qu'il contient.

Le retrait du conteneur 23 par dévissage s'effectue sans avoir à retirer le dispositif 1 du tronc de l'arbre 3, dispositif 1 qui est alors le plus souvent bondé de chenilles dans le volume V compris entre le tronc de l'arbre 3, le trottoir 4, et la paroi périphérique latérale 5.

Le dispositif 1 de piégeage décrit sur les figures n'est qu'un exemple particulier de mode de réalisation, et il convient de noter que celui-ci peut être modifié dans ses formes pour convenir à diverses utilisations sans pour autant sortir du domaine de protection de la présente invention. La présence d'un conteneur 23 pour recueillir les animaux nuisibles et/ou d'une paroi périphérique latérale 5 est parfaitement optionnelle. En alternative, le trottoir 4 sensiblement annulaire peut par exemple comporter une fosse destinée à être remplie d'une substance liquide ou solide destinée à tuer ou à repousser les animaux nuisibles. On pourra également munir le trottoir 4 sensiblement annulaire d'une substance adhésive ou gluante destinée à retenir les animaux nuisibles.

Par ailleurs, le dispositif 1 de piégeage décrit précédemment peut indifféremment être utilisé dans l'orientation illustrée sur les figures ou dans une orientation opposée pour bloquer et/ou tuer et/ou capturer des animaux nuisibles lors de leur montée sur l'arbre 3 ou lors de leur descente de l'arbre 3.

La présente invention n'est pas limitée aux modes de réalisation qui ont été explicitement décrits, mais elle en inclut les diverses variantes et généralisations contenues dans le domaine des revendications ci-après.

## Revendications

1. Dispositif (1) de piégeage d'animaux nuisibles tels que les chenilles, comportant un collier (2) conformé pour entourer le tronc d'un arbre (3), ledit collier (2) comprenant un trottoir (4) sensiblement annulaire s'étendant sensiblement dans un premier plan (P1) destiné à être orienté horizontalement, dans lequel le collier (2) est au moins en partie constitué par une pluralité de tronçons de collier (6a - 6f) reliés entre eux de façon amovible par des moyens de connexion (7) autorisant chaque tronçon de collier (6a - 6f) à pivoter par rapport aux tronçons de collier adjacents (6a - 6f) autour d'axes orientés selon une première direction (I-I) sensiblement perpendiculaire au premier plan (P1), dans lequel :
- chaque tronçon de collier (6a - 6f) s'étend entre deux extrémités (8, 9),
- chaque tronçon de collier (6a - 6f) comporte à une de ses extrémités (8, 9) un axe de pivot (10) orienté selon la première direction (I-I),
- chaque tronçon de collier (6a - 6f) comporte à l'autre de ses extrémités (8, 9) des moyens de réception (11) de l'axe de pivot (10) d'un tronçon de collier adjacent (6a - 6f),
**caractérisé en ce que** les moyens de réception (11) comportent, à distance l'un de l'autre selon la première direction (I-I) :
- un premier logement cylindrique de réception (12) fermé selon sa périphérie et orienté selon la première direction (I-I),
- un second logement cylindrique de réception (13) orienté selon la première direction (I-I) et muni d'une fente latérale d'introduction (14).

2. Dispositif selon la revendication 1, **caractérisé en ce que** :
- la fente latérale d'introduction (14) présente une largeur (ℓ) inférieure au diamètre (d) de l'axe de pivot (10) d'un tronçon de collier adjacent (6a - 6f),
- le second logement cylindrique de réception (13) est fabriqué en un matériau présentant une élasticité suffisante pour autoriser le montage en force de l'axe de pivot (10) d'un tronçon de collier adjacent (6a - 6f) dans le second logement cylindrique de réception (13), à travers la fente latérale d'introduction (14).

3. Dispositif (1) selon l'une des revendications 1 ou 2, **caractérisé en ce que** chaque tronçon de collier (6a-6f) est formé d'une seule pièce avec son axe de pivot (10) et ses moyens de réception (11) respectifs.

4. Dispositif (1) selon l'une quelconque des revendications 1 à 3, **caractérisé en ce que** les tronçons de collier (6a-6f) sont fabriqués en matière plastique.

5. Dispositif (1) selon l'une quelconque des revendications 1 à 4, **caractérisé en ce qu'**il comprend des moyens de barrière (50) sur le trottoir (4) sensiblement annulaire, comportant de préférence une paroi périphérique latérale (5) s'étendant depuis et à l'écart du trottoir (4) sensiblement annulaire selon la première direction (I-I) sensiblement perpendiculaire au premier plan (P1).

6. Dispositif (1) selon l'une quelconque des revendications 1 à 5, **caractérisé en ce que** le collier (2) comprend des tronçons de collier (6a - 6e) tous identiques entre eux.

7. Dispositif (1) selon l'une quelconque des revendications 1 à 5, **caractérisé en ce que** le collier (2) comporte :
- des tronçons de collier (6a - 6e) dépourvus de moyens d'ouverture (15), qui sont tous identiques entre eux,
- au moins un tronçon de collier (6f) muni de moyens d'ouverture (15) comportant un orifice (16) dans le trottoir (4) permettant un échappement dirigé des animaux nuisibles.

8. Dispositif (1) selon la revendication 7, **caractérisé en ce qu'**il comporte des moyens de tenue (17) d'un tuyau (180) dans l'orifice (16).

9. Dispositif (1) selon l'une des revendications 7 ou 8, **caractérisé en ce qu'**il comprend des moyens de retenue (24) amovibles d'un conteneur (23) destiné à recevoir et contenir les animaux nuisibles s'échappant par l'orifice (16).

10. Dispositif (1) selon la revendication 9, **caractérisé en ce que** les moyens de retenue (24) amovibles comprennent un filetage intérieur (26) pour retenir par vissage un conteneur (23) de type bouteille à goulot (280) muni d'un filetage extérieur (27).

11. Dispositif (1) selon la revendication 10, **caractérisé en ce qu'**il comporte un ou plusieurs adaptateurs destinés à se visser dans le filetage intérieur (26) des moyens de retenue (24) amovibles, et comportant respectivement un filetage intérieur de dimensions différentes de celles du filetage intérieur (26) des moyens de retenue (24) amovibles.

12. Dispositif (1) selon l'une quelconque des revendications 1 à 11, **caractérisé en ce que** les tronçons de collier (6a - 6f) comportent chacun :
- un tronçon de trottoir (4'),
- au moins une languette (28) s'étendant depuis et en prolongement du tronçon de trottoir (4'), destinée à venir à recouvrement au moins partiel du tronçon de trottoir (4') d'un tronçon de collier adjacent (6a - 6f).

13. Dispositif (1) selon l'une quelconque des revendications 1 à 12, **caractérisé en ce que** les tronçons de collier (6a - 6f) comportent chacun un tronçon de trottoir (4') à bord intérieur libre (30) courbe concave.

14. Dispositif (1) selon l'une quelconque des revendications 1 à 13, **caractérisé en ce qu'**il comporte des moyens de jonction (31) souples destinés à joindre le collier (2) avec le tronc de l'arbre (3).

15. Dispositif (1) selon la revendication 14, **caractérisé en ce que** les moyens de jonction (31) comprennent un arrangement (32) de poils (33) souples de densité adaptée pour empêcher le passage des animaux nuisibles.

16. Dispositif (1) selon la revendication 15, **caractérisé en ce que** l'arrangement (32) de poils (33) souples est un joint à poils souples (34) rapporté et fixé sur le trottoir (4) sensiblement annulaire.

17. Dispositif (1) selon la revendication 16, **caractérisé en ce qu'**il comprend des moyens de maintien (35) en orientation fixe du joint à poils souples (34) dans une orientation prédéterminée par rapport au trottoir (4) sensiblement annulaire.

18. Dispositif (1) selon la revendication 17, **caractérisé en ce que** :
- le joint à poils souples (34) comporte un corps de base (36) semi-rigide à section transversale non circulaire depuis lequel s'étendent les poils (33) souples,
- le collier (2) comporte des lumières de réception (37) du joint à poils souples (34), à section transversale non circulaire de forme sensiblement complémentaire à la section transversale non circulaire du corps de base (36) du joint à poils souples (34).

19. Dispositif selon l'une quelconque des revendications 1 à 18, **caractérisé en ce que** le trottoir (4) sensiblement annulaire est pourvu de trous (38) dimensionnés de façon à évacuer les eaux de pluie sans pour autant autoriser le passage des animaux nuisibles à piéger.

## Patentansprüche

1. Vorrichtung (1) zum Fangen tierischer Schädlinge, wie Raupen, aufweisend eine Manschette (2), die eingerichtet ist, den Stamm eines Baumes (3) zu umgreifen, wobei die Manschette (2) einen im wesentlichen kranzförmigen Durchgang (4) umfasst, der sich im Wesentlichen in einer ersten Ebene (P1) erstreckt, horizontal orientiert sein soll, wobei die Manschette (2) zumindest in Teilen aus einer Vielzahl von Manschettenteilen (6a-6f) besteht, die in einer lösbaren Weise mittels Verbindungsmitteln (7) verbunden sind, welche derart ausgebildet sind, dass jedes Manschettenteil (6a-6f) mit benachbarten Manschettenteilen (6a-6f) in einer sich über Achsen schwenkenden Weise verbunden sind, die in einer ersten Richtung (I-I) im Wesentlichen rechtwinklig zur ersten Ebene (P1) orientiert sind, wobei:
- sich jedes Manschettenteil (6a-6f) zwischen zwei Enden (8, 9) erstreckt,
- jedes Manschettenteil (6a-6f) an einem seiner Enden (8, 9) einen Scharnierstift (10) besitzt, der in der ersten Richtung (I-I) ausgerichtet ist,
- jedes Manschettenteil (6a-6f) am anderen seiner Enden (8, 9) Mittel (11) zur Aufnahme des Scharnierstift (10) eines benachbarten Manschettenteils (6a-6f) besitzt,
**dadurch gekennzeichnet, dass** die Aufnahmemittel (11) in einem Abstand voneinander in der ersten Richtung (I-I) umfassen:
- ein erstes zylindrisches Aufnahmegehäuse (12), das umfänglich verschlossen und in der ersten Richtung (I-I) ausgerichtet ist,
- ein zweites zylindrisches Aufnahmegehäuse (13), das in der ersten Richtung (I-I) ausgerichtet und mit einem seitlichen Aufnahmeschlitz (14) ausgestattet ist.

2. Vorrichtung nach Anspruch 1, **dadurch gekennzeichnet, dass**:
- der seitliche Aufnahmeschlitz (14) eine Breite (ℓ) besitzt, die kleiner als ein Durchmesser (d) des Scharnierstiftes (10) eines benachbarten Manschettenteils (6a-6f) ist,
- das zweite zylindrische Aufnahmegehäuse (13) aus einem Material hergestellt ist, das eine genügende Elastizität besitzt, um dem Scharnierstift (10) eines benachbarten Manschettenteils (6a-6f) zu erlauben, durch den seitlichen Aufnahmeschlitz (14) in den zweiten zylindrischen Aufnahmegehäuse (13) kraftschlüssig eingesetzt zu werden.

3. Vorrichtung (1) nach Anspruch 1 oder 2, **dadurch gekennzeichnet, dass** jedes Manschettenteil (6a-6f) einstückig mit seinem Scharnierstift (10) und seinen entsprechenden Aufnahmemitteln (11) ist.

4. Vorrichtung (1) nach einem der Ansprüche 1 bis 3, **dadurch gekennzeichnet, dass** die Manschettenteile (6a-6f) aus Plastikmaterial hergestellt sind.

5. Vorrichtung (1) nach einem der Ansprüche 1 bis 4, **dadurch gekennzeichnet, dass** es Abgrenzmittel (50) auf dem im Wesentlichen kranzförmigen Durchgang (4) umfasst, die vorzugsweise eine äußere Seitenwand (5) besitzen, die sich weg vom im Wesentlichen kranzförmigen Durchgang (4) in der ersten Richtung (I-I) im Wesentlichen rechtwinklig zur ersten Ebene (P1) erstreckt.

6. Vorrichtung (1) nach einem der Ansprüche 1 bis 5, **dadurch gekennzeichnet, dass** die Manschette (2) Manschettenteile (6a-6e) umfasst, die alle miteinander identisch sind.

7. Vorrichtung (1) nach einem der Ansprüche 1 bis 5, **dadurch gekennzeichnet, dass** die Manschette (2) umfasst:
- Manschettenteile (6a-6e), die keine Öffnungsmittel (15) enthalten und alle miteinander identisch sind,
- wenigstens ein Manschettenteil (6f), das mit einem Öffnungsmittel (15), das eine Öffnung (16) im Durchgang (4) besitzt, ausgestattet ist, der es ermöglicht, tierische Schädlinge direkt auszuräumen.

8. Vorrichtung (1) nach Anspruch 7, **dadurch gekennzeichnet, dass** sie Haltemittel (17) für eine Röhre (180) in der Öffnung (16) besitzt.

9. Vorrichtung (1) nach Anspruch 7 oder 8, **dadurch gekennzeichnet, dass** sie enfernbare Rückhaltemittel (24) für einen Container (23) umfasst zum Aufnehmen und Lagern der tierischen Schädlinge, die durch die Öffnung (16) ausgeräumt sind.

10. Vorrichtung (1) nach Anspruch 9, **dadurch gekennzeichnet, dass** die Rückhaltemittel (24) ein Innengewinde (26) umfassen zum geschraubten Rückhalten eines Containers (23) in Flaschenform mit einem Hals (280) der mit einem Außengewinde (27) ausgestattet ist.

11. Vorrichtung (1) nach Anspruch 10, **dadurch gekennzeichnet, dass** es einen oder mehrere Adapter besitzt zum Schrauben in das Innengewinde (26) der entfernbaren Rückhaltemittel (24), wobei jeder ein Innengewinde mit einer Größe aufweist, die von der Größe des Innengewindes (26) der entfernbaren Rückhaltemittel (24) verschieden ist.

12. Vorrichtung (1) nach einem der Ansprüche 1 bis 11, **dadurch gekennzeichnet, dass** jedes Manschettenteil (6a-6f) besitzt:
- einen Durchgangsabschnitt (4'),
- wenigstens einen Streifen (28), der sich von und in Weiterbildung zum Durchgangsabschnitt (4') erstreckt zum wenigstens teilweise Abdecken des Durchgangsabschnittes (4') eines benachbarten Manschettenteils (6a-6f).

13. Vorrichtung (1) nach einem der Ansprüche 1 bis 12, **dadurch gekennzeichnet, dass** die Manschettenteile (6a-6f) jede einen Durchgangsabschnitt (4) besitzen mit einer konkav gekrümmten freien inneren Kante (30).

14. Vorrichtung (1) nach einem der Ansprüche 1 bis 13, **dadurch gekennzeichnet, dass** sie flexible Anbindungsmittel (31) zum Anbinden der Manschette (2) an den Stamm des Baumes (3) aufweist.

15. Vorrichtung (1) nach Anspruch 14, **dadurch gekennzeichnet dass** die Anbindungsmittel (31) eine Anordnung (32) flexibler Borsten (33) mit einer Dichte umfassen, die geeignet ist die tierischen Schädlinge an einem Durchgang zu hindern.

16. Vorrichtung (1) nach Anspruch 15, **dadurch gekennzeichnet, dass** die Anordnung (32) flexibler Borsten (33) eine Dichtung (34) mit flexiblen Borsten ist, die am im Wesentlichen kranzförmigen Durchgang (4) angebracht und befestigt sind.

17. Vorrichtung (1) nach Anspruch 16, **dadurch gekennzeichnet, dass** sie Mittel (35) zum Halten der Dichtung (34) mit den flexiblen Borsten in einer festen Orientierung umfasst, die eine vorbestimmte Orientierung bezüglich des im Wesentlichen kranzförmigen Durchgangs (4) ist.

18. Vorrichtung (1) nach Anspruch 17, **dadurch gekennzeichnet, dass**:
- die Dichtung (34) mit flexiblen Borsten einen teilstarren Grundkörper (36) mit einem nichtkreisrunden Querschnitt besitzt, von dem aus sich die flexiblen Borsten (33) erstrecken,
- die Manschette (2) Öffnungen (37) zur Aufnahme der Dichtung (34) mit den flexiblen Borsten besitzt mit einem nichtkreisförmigen Querschnitt mit einer Form, die im Wesentlichen komplementär zum nichtkreisförmigen Querschnitt des Grundkörpers (36) der Dichtung (34) mit den flexiblen Borsten ist.

19. Vorrichtung nach einem der vorstehenden Ansprüche 1 bis 18, **dadurch gekennzeichnet, dass** der im Wesentlichen kranzförmige Durchgang (4) mit Ausnehmungen (38) ausgestattet ist, die ausgestattet sind, Regenwasser zu leeren, ohne anderweitig zu fangende tierische Schädlinge passieren zu lassen.

## Claims

1. A device (1) for trapping animal pests such as caterpillars, having a collar (2) which is designed to surround the trunk of a tree (3), said collar (2) comprising a substantially annular walkway (4) that extends substantially in a first plane (P1) that is intended to be oriented horizontally, where the collar (2) consists at least in part of a plurality of collar sections (6a-6f) that are connected together in a removable manner by connecting means (7) allowing each collar section (6a-6f) to pivot with respect to the adjacent collar sections (6a-6f) about axes that are oriented in a first direction (I-I) substantially perpendicular to the first plane (P1), where:
- each collar section (6a-6f) extends between two ends (8, 9),
- each collar section (6a-6f) has, at one of its ends (8, 9), a pivot pin (10) that is oriented in the first direction (I-I),
- each collar section (6a-6f) has, at the other of its ends (8, 9), means (11) for receiving the pivot pin (10) of an adjacent collar section (6a-6f),
wherein the receiving means (11) have, at a distance from one another in the first direction (I-I):
- a first cylindrical receiving housing (12) that is sealed along its periphery and oriented in the first direction (I-I),
- a second cylindrical receiving housing (13) that is oriented in the first direction (I-I) and provided with a lateral introduction slot (14).

2. The device as claimed in claim 1, wherein:
- the lateral introduction slot (14) has a width (ℓ) less than the diameter (d) of the pivot pin (10) of an adjacent collar section (6a-6f),
- the second cylindrical receiving housing (13) is produced from a material having sufficient elasticity to allow the pivot pin (10) of an adjacent collar section (6a-6f) to be force-fitted into the second cylindrical receiving housing (13), through the lateral introduction slot (14).

3. The device (1) as claimed in either of claims 1 and 2, wherein each collar section (6a-6f) is formed as a single piece with its pivot pin (10) and its respective receiving means (11).

4. The device (1) as claimed in any one of claims 1 to 3, wherein the collar sections (6a-6f) are produced from plastics material.

5. The device (1) as claimed in any one of claims 1 to 4, which comprises barrier means (50) on the substantially annular walkway (4), preferably having a peripheral side wall (5) that extends away from the substantially annular walkway (4) in the first direction (I-I) substantially perpendicular to the first plane (P1) .

6. The device (1) as claimed in any one of claims 1 to 5, wherein the collar (2) comprises collar sections (6a-6e) that are all identical to one another.

7. The device (1) as claimed in any one of claims 1 to 5, wherein the collar (2) has:
- collar sections (6a-6e) that have no opening means (15) and are all identical to one another,
- at least one collar section (6f) that is provided with opening means (15) comprising an orifice (16) in the walkway (4) that allows the animal pests to be evacuated in a directed manner.

8. The device (1) as claimed in claim 7, which has means (17) for holding a tube (180) in the orifice (16).

9. The device (1) as claimed in either of claims 7 and 8, which comprises removable means (24) for retaining a container (23) that is intended to receive and contain the animal pests that are evacuated through the orifice (16) .

10. The device (1) as claimed in claim 9, wherein the removable retaining means (24) comprise an internal thread (26) for retaining, by screwing, a container (23) of the bottle type having a neck (280) that is provided with an external thread (27).

11. The device (1) as claimed in claim 10, which has one or more adapters that are intended to be screwed into the internal thread (26) of the removable retaining means (24) and each have an internal thread having different dimensions than those of the internal thread (26) of the removable retaining means (24).

12. The device (1) as claimed in any one of claims 1 to 11, wherein the collar sections (6a-6f) each have:
- a walkway section (4'),
- at least one tab (28) that extends from and in continuation of the walkway section (4') and is intended to at least partially cover the walkway section (4') of an adjacent collar section (6a-6f).

13. The device (1) as claimed in any one of claims 1 to 12, wherein the collar sections (6a-6f) each have a walkway section (4') having a concavely curved free inner edge (30).

14. The device (1) as claimed in any one of claims 1 to 13, which has flexible joining means (31) that are intended to join the collar (2) to the trunk of the tree (3).

15. The device (1) as claimed in claim 14, wherein the joining means (31) comprise an arrangement (32) of flexible bristles (33) having a density suitable for preventing the animal pests from passing through.

16. The device (1) as claimed in claim 15, wherein the arrangement (32) of flexible bristles (33) is a seal (34) having flexible bristles that is attached and fixed to the substantially annular walkway (4).

17. The device (1) as claimed in claim 16, which comprises means (35) for maintaining the seal (34) having flexible bristles in a fixed orientation, in a predetermined orientation with respect to the substantially annular walkway (4).

18. The device (1) as claimed in claim 17, wherein:
- the seal (34) having flexible bristles has a semirigid base body (36) having a noncircular cross section, from which the flexible bristles (33) extend,
- the collar (2) has openings (37) for receiving the seal (34) having flexible bristles, having a noncircular cross section with a shape substantially complementary to the noncircular cross section of the base body (36) of the seal (34) having flexible bristles.

19. The device as claimed in any one of claims 1 to 18, wherein the substantially annular walkway (4) is provided with holes (38) that are dimensioned to evacuate rainwater without otherwise allowing the animal pests to be trapped to pass through.
